# EUROPEAN PATENT APPLICATION

(11) **EP 4 782 829 A1**
(43) Date of publication of application: **29.07.2026**
(21) Application number: 25201807.2
(22) Date of filing: 12.09.2025
(51) Int. Cl.: G01N 30/60, G01N 30/30, G01N 30/50, G01N 30/54

(54) **CHROMATOGRAPHY DEVICE, CHROMATOGRAPHY SYSTEM AND METHOD FOR CHANGING CHROMATOGRAPHIC COLUMN**

(30) Priority: 26.01.2025 CN 202510121558
(71) Applicant: Hangzhou Calibra Technologies Co., Ltd., Hangzhou, Zhejiang 310013 (CN)
(72) Inventor: Liu, Huafen, Hangzhou, Zhejiang, 310013 (CN); Ji, Zhibin, Hangzhou, Zhejiang, 310013 (CN); Huang, Shunyan, Hangzhou, Zhejiang, 310013 (CN); Wang, Yabo, Hangzhou, Zhejiang, 310013 (CN); Liu, Xiaoping, Hangzhou, Zhejiang, 310013 (CN)
(74) Representative: Petraz, Gilberto Luigi

(57) **Abstract**

A chromatography device includes a column cartridge assembly (10) and a cartridge-changing mechanism (20). The column cartridge assembly (10) includes a cartridge body (110) and a chromatographic column (120) disposed in the cartridge body (110). Each of both ends of the chromatographic column (120) is connected to an adapter assembly (130) extending through a side wall of the cartridge body (110). The adapter assembly (130) is provided with a first channel (131) being in communication with the chromatographic column (120). The cartridge-changing mechanism (20) includes a frame (210) and a sample input-output unit disposed on the frame (210). The frame (210) is provided with a positioning assembly (230) configured for positioning the column cartridge assembly (10). The sample input-output unit (220) includes two movable sample probes (221), and the two sample probes (221) are connected to the two adapter assemblies (130), respectively.

## Description

### CROSS-REFERENCE TO RELATED APPLICATION

This application claims priority to Chinese patent application No. 202510121558.3, filed on January 26, 2025.

### TECHNICAL FIELD

The present invention relates to the field of analytical instrument and purification equipment, and in particular, to a chromatography device, a chromatography system and a method for changing a chromatographic column.

### BACKGROUND

Chromatographic analysis is widely used in various fields such as chemistry, biochemistry, pharmaceuticals, food science, and environmental science for the analysis and purification of complex components in samples. For example, in the field of pharmaceutical research and development, it can be used for drug purification; in the field of environmental testing, it can be used to detect pollutants in water and air; and in the field of food science, it can be used to analyze food components.

High-performance liquid chromatography (HPLC) is an important branch of chromatographic analysis, and the chromatographic column is a key component in an HPLC system for separating the various components in a sample. A chromatographic column typically consists of a long, narrow column-shaped container filled with a stationary phase (such as silica gel or polymers). When the mobile phase (such as solvents or water) containing the sample passes through the stationary phase, the stationary phase interacts with various components of the sample, thereby separating the components of the samples from each other. The performance of the chromatographic column directly affects the analysis results and reproducibility of the chromatographic column. However, as the chromatographic column is used over time, issues such as column blockage, chemical degradation, physical wear, and matrix effects may arise, thus a new chromatographic column should be changed to the chromatography device. Additionally, when samples are frequently switched in the chromatographic analysis, a new chromatographic column should be replaced.

Currently, the methods for changing chromatographic columns primarily include the following:

(1) Direct replacement of the chromatographic column. Unscrew the connectors at both ends of the stationary chromatographic column, remove the failed stationary chromatographic column from the HPLC system, install the new stationary chromatographic column at the same position, and then re-tighten the connectors at both ends of the stationary column. Direct replacement of the chromatographic column is not only inconvenient but may also cause a sudden increase in the pressure of the mobile phase within the HPLC system during the replacement process, potentially damaging components such as pumps and connectors of the HPLC system. Additionally, air may be introduced during the replacement process, leading to changes in the solvent strength and pH of the mobile phase, which can affect the accuracy of the analysis results.

(2) Online replacement method, which is a method for directly replacing the failed chromatographic column with a new chromatographic column via an online replacement connector of the HPLC system while keeping the HPLC system running. The online replacement method is costly and complex to operate, requiring professional personnel to perform the procedure. Additionally, during the online replacement of the column, the switch between the old and new columns may cause temporary fluctuations in the analysis results, thereby affecting the accuracy of the analysis results.

(3) Chromatographic column regeneration method, which involves using specific chemical reagents or physical methods to regenerate blocked chromatographic columns or degraded chromatographic columns, restoring their performance. The chromatographic column regeneration process is complex and requires specialized chemical knowledge and equipment; moreover, the performance of regenerated columns cannot be fully restored to their initial state, affecting the long-term stability and accuracy of analysis results.

(4) Spare chromatographic column method involves installing a spare chromatographic column in the HPLC system, so that when the main chromatographic column should be replaced, it can be switched to the spare chromatographic column. The spare chromatographic column method requires the use of a spare chromatographic column and an HPLC system capable of automatically switching the chromatographic columns, as well as regular maintenance and calibration of the spare column. he spare chromatographic column method increases the complexity and cost of the HPLC system. Additionally, prolonged non-use of the spare chromatographic column may cause its performance to deteriorate, thereby affecting the accuracy of the analysis results.

### SUMMARY

In view of above, it is necessary to provide a chromatography device that can quickly and conveniently change the chromatographic column, a chromatography system and a method for changing the chromatographic column.

A chromatography device includes a column cartridge assembly and a cartridge-changing mechanism. The column cartridge assembly includes a cartridge body and a chromatographic column disposed in the cartridge body. Two adapter assemblies (130) are connected to two ends of the chromatographic column, both of the two adapter assemblies extend through a sidewall of the cartridge body, each of the two adapter assemblies is provided with a first channel, and the first channel is in communication with an inside of the chromatographic column. The cartridge-changing mechanism includes a frame and a sample input-output unit provided on the frame. The frame is provided with a positioning assembly, and the positioning assembly is configured for positioning the column cartridge assembly. The sample input-output unit is provided with two movable sample probes, and the two sample probes are connected to the two adapter assemblies, respectively. When the column cartridge assembly is positioned on the frame by the positioning assembly, the two sample probes are capable of moving between a first position and a second position. When the two sample probes move to the first position, the two sample probes are capable of extending into the two first channels, so that insides of the two sample probes are in communication with the two first channels. When the two sample probes move to the second position, the two sample probes are capable of separating from two adapter assemblies.

In some embodiments, the cartridge-changing mechanism further includes a pressing assembly, and the pressing assembly includes a pressing member, a connecting member and a first elastic member. An end of the connecting member is rotatably connected to the frame, the other end of the connecting member is connected to the pressing member. The first elastic member is capable of acting on the connecting member or the pressing member, so that the pressing member abuts against and is pressed on the column cartridge assembly.

In some embodiments, both ends of each of the two adapter assemblies are provided on two sides of the sidewall of the cartridge body, respectively; each of the two adapter assemblies includes a sealing member, a sealing soleplate and a sealing cap, the sealing soleplate extends through the sidewall of the cartridge body, the sealing soleplate is detachably connected with the sealing cap, a sealing space is defined by the sealing soleplate and the sealing cap surrounding together, the sealing member is disposed in the sealing space, and the sealing member is provided with the first channel; and when the two sample probes are located at the first position, the two sample probes are capable of extending through the sealing cap, and external sidewalls of the two sample probes abut against and fit with the two first channels.

In some embodiments, each of the two adapter assemblies further includes a junk ring, and the junk ring is disposed between the sealing member and the sealing cap, so as to press the sealing member tightly on the sealing soleplate.

In some embodiments, the column cartridge assembly is provided with a heating compartment, the heating compartment is provided with a first pressing plate and a heating assembly, and the first pressing plate abuts against and fits with the heating assembly, a restricting groove is defined by the first pressing plate and the heating assembly, the restricting groove is configured for accommodating at least a part of the chromatographic column, and the heating assembly is configured for heating the chromatographic column accommodated in the restricting groove.

In some embodiments, the chromatographic column is connected to the two adapter assemblies via a pipeline, the pipeline includes a sample inlet pipeline, one end of the simple inlet pipeline is in communication with one of the two first channels, the other end of the simple inlet pipeline is connected to and in communication with an inlet port of the chromatographic column, the restricting groove is configured for accommodating a part of the sample inlet pipeline, and the heating assembly is further configured for heating the sample inlet pipeline accommodated in the restricting groove.

In some embodiments, the heating assembly includes a heating component, a thermal conductor, a temperature sensor and a thermal switch, one side of the thermal conductor is connected to the heating component, the other side of the thermal conductor abuts against and match with the first pressing plate, and the restricting groove is defined by the first pressing plate and the thermal conductor surrounding together. The heating component is configured for heating the chromatographic column accommodated in the restricting groove. The temperature sensor is configured for testing a temperature of the thermal conductor. Both the temperature sensor and the heating component are in communication connection with the thermal switch, and the thermal switch is configured for turning on or turning off the heating component according to a temperature tested by the temperature sensor.

In some embodiments, the cartridge body is further provided with a bayonet socket, the bayonet socket is provided with an intelligent chip, and the bayonet socket extends through the cartridge body. The frame is provided with a plug connector, when the column cartridge assembly is positioned on the frame by the positioning assembly, the plug connector is capable of inserting into the bayonet socket.

The present invention further provides a chromatography system, which includes the chromatography device described above.

The present invention further provides a method for changing a chromatography column. The method is used to change a chromatographic column in a chromatography device described above. The column cartridge assembly includes a first column cartridge assembly and a second column cartridge assembly. The first column cartridge assembly is a column cartridge assembly positioned on the frame of the chromatography device before changing the chromatographic column, and the second column cartridge assembly is a column cartridge assembly positioned on the frame of the chromatography device after changing the chromatographic column.

The method for changing the chromatography column includes following steps: transferring sample probes from the first position to the second position, and separating the sample probes from adapter assemblies of the first column cartridge assembly; taking the first column cartridge assembly out from the frame; positioning the second column cartridge assembly on the frame; and transferring the sample probes from the second position to the first position, inserting the sample probes into the adapter assemblies of the second column cartridge assembly, and communicating and connecting the sample probes with the first channels of the second column cartridge assembly, so as to change chromatographic column.

In comparison with the related art, the chromatography device of the present invention includes a column cartridge assembly and a cartridge-changing mechanism. The cartridge-changing mechanism includes a frame and a sample input-output unit disposed on the frame. In the present invention, the chromatographic column is integrated in the cartridge body, and the adapter assemblies connected to both ends of the chromatographic column is disposed on the cartridge body. When the chromatographic column should be changed, the chromatographic column can be changed as long as the whole column cartridge assembly is changed. Since a positioning assembly is provided on the frame, the column cartridge assembly can be positioned with the positioning assembly. Then, when the sample robe is transferred to the first position by transferring the sample probe, an inside of the sample probe is in communication with the first channel. Since the first channel is in communication with the inside of the chromatographic column, the inside of the sample probe can be in communication with the with the inside of the chromatographic column, thereby completing assembling of the column cartridge assembly. When the sample probe is transferred to the second position, the sample probe is separated from the adapter assembly, so that the column cartridge assembly can be detached from the frame, thereby quickly detaching the column cartridge assembly. Thus, in the present invention, by integrating the chromatographic column and the cartridge body as an integral whole, and providing a movable sample probe on the frame, the column cartridge assembly can be quickly changed.

### BRIEF DESCRIPTION OF THE DRAWINGS

In order to more clearly illustrate the technical solutions in the embodiments of the present invention or the prior art, the following is a brief introduction to the drawings used in the description of the embodiments or the prior art. It is obvious that the drawings described below are only some embodiments of the present invention. For those skilled in the art, other drawings can be obtained based on these drawings without creative labor.
FIG. 1 is a stereo schematic diagram of a chromatography device in an embodiment of the present invention.
FIG. 2 is an internal schematic diagram of a column cartridge assembly in an embodiment of the present invention.
FIG. 3 is a section view of a column cartridge assembly in an embodiment of the present invention.
FIG. 4 is a partial enlarged figure of A portion in FIG. 3.
FIG. 5 is a schematic diagram of a cartridge-changing mechanism in an embodiment of the present invention.
FIG. 6 is a schematic diagram of a cartridge-changing mechanism in an embodiment of the present invention from another angle of view.

In the figures,
10 represents a column cartridge assembly; 110 represents a cartridge body; 111 represents a guiding groove; 112 represents a restricting member; 113 represents a bayonet socket; 114 represents a lifting handle;
120 represents a chromatographic column; 121 represents a pipeline;
130 represents an adapter assembly; 131 represents a first channel; 132 represents a sealing member; 133 represents a sealing soleplate; 134 represents a sealing cap; 135 represents a junk ring; 136 represents a first hole; 137 represents a second hole; 138 represents a third hole;
140 represents a heating compartment; 141 represents a baseplate; 142 represents a first pressing plate; 143 represents a heating assembly; 1431 represents a restricting groove; 1432 represents a heating component; 1433 represents a thermal conductor; 1434 represents a temperature sensor; 1435 represents a thermal switch; 144 represents a cover body;
20 represents a cartridge-changing mechanism;
210 represents a frame; 211 represents a first position-detecting component; 212 represents a plug connector;
220 represents a sample input-output unit; 221 represents a sample probe; 222 represents a driving assembly; 2221 represents a fixing plate; 2222 represents a second pressing plate; 2223 represents a second elastic member; 2224 represents a guiding roller; 2225 represents a restricting portion; 2226 represents a concave groove; 223 represents a pushing component; 2231 represents a driving component; 2232 represents a screw rod; 2233 represents a sliding block; 2234 represents a first guiding rail; 2235 represents a transmission assembly; 224 represents a mounting seat; 225 represents a second position-detecting component;
230 represents a positioning assembly; 231 represents a positioning groove; 232 represents a first opening; 233 represents a second opening; 234 represents a positioning plate; 2341 represents a first flange; 2342 represents a second flange; 2343 represents a third flange; 235 represents a first plate; 236 represents a guiding slideway;
240 represents a pressing assembly; 241 represents a pressing member; 242 represents a connecting member; 243 represents a first elastic member; and 244 represents a shock-absorbing pad .

### DETAILED DESCRIPTION

In order that the foregoing purposes, features and advantages of the present invention may be made more apparent and understandable, specific embodiments of the present invention are described in detail below in conjunction with the accompanying drawings. Many specific details are set forth in the following description to facilitate a full understanding of the present invention. However, the present invention is capable of being implemented in many other ways different from those described herein, and those skilled in the art may make similar improvements without violating the connotations of the present invention, and thus the present invention is not limited by the specific embodiments disclosed below.

It is noted that when a component is said to be "fixed to" or "disposed on" another component, it may be directly on the other component or there may be a centred component. When a component is said to be "connected" to another component, it may be directly connected to the other component or there may be both centred components. The terms "vertical", "horizontal", "up", "down", "left", "right" and similar expressions used in the specification of the present invention are for illustrative purposes only and are not meant to be exclusive.

Furthermore, the terms "first", "second" are used for descriptive purposes only and are not to be understood as indicating or implying relative importance or implicitly specifying the number of technical features indicated. Thus, a feature defined with the terms "first", "second" may include at least one such feature, either explicitly or implicitly. In the description of the present invention, "plurality" means at least two, e.g., two, three, etc., unless otherwise expressly and specifically limited.

In the present invention, unless otherwise expressly specified and limited, the first feature "on" or "under" the second feature may be that the first feature is in direct contact with the second feature, or that the first feature is in indirect contact with the second feature through an intermediate medium. Furthermore, the first feature being "above", "on" or "upon" the second feature may mean that the first feature is directly above or diagonally above the second feature, or it may simply mean that the first feature is horizontally higher than the second feature. The first feature being "below", "under" or "beneath" the second feature may be that the first feature is directly below or diagonally below the second feature, or it may simply mean that the first feature is horizontally smaller than the second feature.

Unless otherwise defined, all technical and scientific terms used in the specification of the present invention have the same meaning as commonly understood by those skilled in the art to which the present invention belongs. Terms used in the specification of the present invention are used only for the purpose of describing specific embodiments and are not intended to limit the present invention. The term "and/or" as used in the specification of the present invention includes any and all combinations of one or more of the relevant listed items.

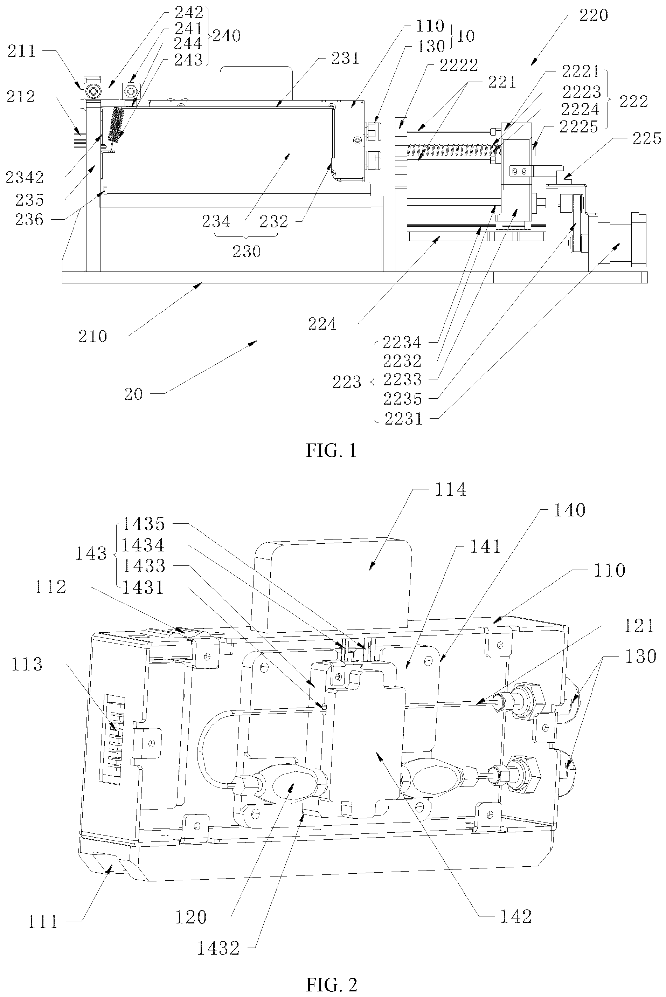

Referring to FIG. 1 to FIG. 6, a chromatography device is provided in the present invention. The chromatography device includes a column cartridge assembly 10 and a cartridge-changing mechanism 20. The column cartridge assembly 10 includes a cartridge body 110 and a chromatographic column 120 disposed in the cartridge body 110. Each of both ends of the chromatographic column 120 is provided with an adapter assembly 130, both of the two adapter assemblies 130 extend through a sidewall of the cartridge body 110, each of the two adapter assemblies 130 is provided with a first channel 131, and the first channel 131 is in communication with an inside of the chromatographic column 120. The cartridge-changing mechanism 20 includes a frame 210 and a sample input-output unit 220 provided on the frame 210. The frame 210 is provided with a positioning assembly 230, and the positioning assembly 230 is configured for positioning the column cartridge assembly 10. The sample input-output unit 220 is provided with two movable sample probes 221, and the two sample probes 221 are connected to the two adapter assemblies 130, respectively. When the column cartridge assembly 10 is positioned on the frame 210 by the positioning assembly 230, two sample probes 221 are capable of moving between a first position and a second position. When the two sample probes 221 move to the first position, the two sample probes 221 are capable of extending into the two first channels 131 of the two adapter assemblies 130, so that insides of the two sample probes 221 are in communication with the two first channels 131. When the two sample probes 221 move to the second position, the two sample probes 221 are capable of separating from two adapter assemblies 130.

In the present embodiment, the adapter assemblies 130 extend though the sidewall of the cartridge body 110 of the column cartridge assembly 10, and the adapter assemblies 130 are configured for connecting the chromatographic column 120 and the sample probes 221 of the cartridge-changing mechanism 20. In addition, the chromatographic column 120 is integrated in the cartridge body 110 of the column cartridge assembly 10. When the chromatographic column 120 of the chromatography device should be changed, the chromatographic column 120 can be changed by directly replacing a column cartridge assembly 10 having a failed chromatographic column with a column cartridge assembly 10 having a new chromatographic column. In other words, in the present invention, the chromatographic column 120 and the cartridge body 110 are integrated as a whole, and the sample probe 221 capable of moving between the first position and the second position is provided on the frame 210, so that sample probe 221 can be in or out of communication with the chromatographic column 120 in the column cartridge assembly 10 via the first channel 131 of the adapter assembly 130. **In** addition, the adapter assembly 130 extends through the sidewall of the cartridge body 110 of the column cartridge assembly 10. Thus, the chromatographic column 120 can be quickly changed by changing the column cartridge assembly 10.

It could be understood that before disposing the column cartridge assembly 10 having the new chromatographic column in the chromatography device, a new chromatographic column should be disposed in the column cartridge assembly 10 and the new chromatographic column should be connected to and communicated with the adapter assembly 130. It is not necessary for the chromatography device to stop working in the process of preparing the column cartridge assembly 10 having a new chromatographic column. The column cartridge assembly 10 having a new chromatographic column should be prepared before detaching the column cartridge assembly 10 having a failed chromatographic column. **In** the chromatography device of the present invention, when the sample probe 221 is transferred to the second position and the sample probe 221 separate from the adapter assembly 130, the column cartridge assembly 10 having the failed chromatographic column is taken out from the frame 210 and the column cartridge assembly 10 having the new chromatographic column is disposed at a target position. When the sample probe 221 is transferred to the first position, the inside of the sample probe 221 is in communication with the first channel 131. Thus, the column cartridge assembly 10 and the chromatographic column 120 can be quickly changed. When the chromatography device of the present embodiment is applied, the processing of changing the chromatographic column 120 can be simplified, and a time for changing the chromatographic column 120 can be saved.

Furthermore, each of both ends of the chromatographic column 120 is connected to an adapter assembly 130 via a pipeline 121, and each of both ends of the chromatographic column 120 is in communication with the first channel 131. **In** this way, the chromatographic column 120 can be conveniently disposed in or detached from the column cartridge assembly 10, and a suitability between the chromatographic column 120 and the column cartridge assembly 10 is better.

It should be noted that when the sample probe 221 is not inserted into the first channel 131 of the adapter assembly 130, the first channel 131 is sealed. **In** this way, when the sample probe 221 is in communication with the chromatographic column 120 via the first channel 131, the sample will not leak from the adapter assembly 130 in a process of flowing into the chromatographic column 120.

A method for operating the chromatography device includes following steps: disposing the column cartridge assembly 10 on the frame 210; positioning the column cartridge assembly 10 by the positioning assembly 230 on the frame 210; after the column cartridge assembly 10 arrives a target position, when the sample probe 221 is transferred to the first position, communicating the inside of the sample probe 221 with the inside of the chromatographic column 120 via the first channel 131 of the adapter assembly 130, so as to dispose the chromatographic column on the chromatography device. If a column cartridge assembly 10 having a failed chromatographic column is disposed on the frame 210 of the cartridge-changing mechanism 20, the column cartridge assembly 10 having the failed chromatographic column should be detached first. The column cartridge assembly 10 having the failed chromatographic column is detached from the frame 210 by a following method. When the sample probe 221 is transferred to the second position, the sample probe 221 is away from the adapter assembly 130 and the sample probe 221 is out of communication with the chromatographic column 120 of the column cartridge assembly 10, and the column cartridge assembly 10 having the failed chromatographic column can be directly removed from the frame 210. When the frame 210 is not provided with a column cartridge assembly 10 having a failed chromatographic column, that is, it is not necessary to remove the column cartridge assembly 10 having the failed chromatographic column, a column cartridge assembly 10 having a new chromatographic column can be directly disposed on the chromatography device.

Furthermore, in the present embodiment, the sample probe 221 can automatically move between the first position and the second position. In some embodiments, the position assembly 230 communicates with a programmable logic controller (PLC), the positioning assembly 230 can detect a real-time position of the column cartridge assembly 10 and upload the real-time position to the PLC. When the positioning assembly 230 or the PLC judges that the column cartridge assembly 10 reaches a target position, the PLC can control the driving component 2231 (such as a motor, an air cylinder and the like) to cause the sample probe 221 to move to the first position from the second position, and make the sample probe 221 communicate with the first channel 131 of the chromatographic column 120 via the adapter assembly 130. Similarly, after the PLC receives an order of moving the sample probe 221 from the second position to the first position, the PLC can control the driving component 2231 to cause the sample probe 221 to move to the second position from the first position, and make the sample probe 221 and the chromatographic column 120 out of communication, so that the sample probe 221 separate from the first channel 131 of the adapter assembly 130. In some embodiments, the sample probe 221 can be artificially transferred between the first position and the second position, which are not limited in the present invention.

It should be noted that the target position is a position at which the sample probe 221 can extend into the first channel 131 of the adapter assembly when the sample probe 221 is located at the first position. A specific position of the target position on the cartridge-changing mechanism 20 is not limited in the present invention.

**In** some embodiments, referring to FIG. 2, FIG. 3 and FIG. 4, both ends of each of the two adapter assemblies 130 are provided on two sides of the sidewall of the cartridge body 110, respectively. 3ach of the two adapter assemblies 130 includes a sealing member 132, a sealing soleplate 133 and a sealing cap 134, the sealing soleplate 133 extends through the sidewall of the cartridge body 110, the sealing soleplate 133 is detachably connected with the sealing cap 134, and a sealing space is defined by the sealing soleplate 133 and the sealing cap 134 surrounding together. The sealing member 132 is disposed in the sealing space, and the sealing member 132 is provided with the first channel 131. When the two sample probes 221 are located at the first position, the two sample probes 221 extend through the sealing cap 134, and external sidewalls of the two sample probes 221 abut against and fit with the two first channels 131. Thus, when the chromatographic column 120 is disposed in the column cartridge assembly 10, the sample can flow into the chromatographic column 120 via the sample probe 221 and the adapter assembly 130, and flow out of the chromatographic column 120 via the other sample probe 221 and the other adapter assembly 130. **In** this way, in the present embodiment, the chromatographic column 120 can be changed by changing the column cartridge assembly 10. In addition, when the sample probe 221 is in communication with the chromatographic column 120 via the first channel 131, the sample will not leak from the adapter assembly 130 in a process of flowing into the chromatographic column 120, thereby ensuring operation of the chromatography device.

It could be understood that the sealing cap 134 is provided with a first hole 136, the first hole 136 and the first channel 131 are correspondingly provided, and the sample probe 221 extend through the sealing cap 134 via the first hole 136. **In** the processing that the sample probe 221 transfers from the second position to the first position and inserts into the first channel 131, the sample probe 221 can insert into the first channel 131 after extending though the first hole 136.

It could be understood that the sealing soleplate 133 is provided with a second hole 137, the second hole 137 is provided corresponding to the first channel 131, and a pipeline 121 connected to and in communication with the chromatographic column 120 extend through the sealing soleplate 133 through the second hole 137. When the pipeline 121 is in communication with the first channel 131, the pipeline 121 can insert into the first channel 131 after extending through the second hole 137 and be in communication with the first channel 131.

Furthermore, a central axis of the first hole 136, a central axis of the first channel 131 and a central axis of the second hole 137 are coaxially provided. **In** this way, when the sample probe 221 is located at the first position, the sample can flow smoothly from the sample probe 221 and the adapter assembly 130.

**In** some embodiments, each of the two adapter assemblies 130 further includes a junk ring 135, and the junk ring 135 is provided between the sealing member 132 and the sealing cap 134, so as to press the sealing member 132 tightly on the sealing soleplate 133. **In** this way, a position of the sealing member 132 can be stabilized, so as to prevent the sealing member 132 from moving or skewing in the sealing spaced defined by sealing soleplate 133 and the sealing cap 134. Thus, it can ensure that the central axis of the first channel 131 will not change, so that the sample probe 221 can accurately insert into the first channel 131 each time the sample probe 221 arrives the first position.

It could be understood that the junk ring 135 is provided with a third hole 138. The first hole 136, the third hole 138 and the first channel 131 are correspondingly provided, and the sample probe 221 extends through the junk ring 135 through the third hole 138. **In** the process that the sample probe 221 moves from the second position to the first position and inserts into the first channel 131, the sample probe 221 extends through the first hole 136 and the third hole 138 first, and then extends into the first channel 131.

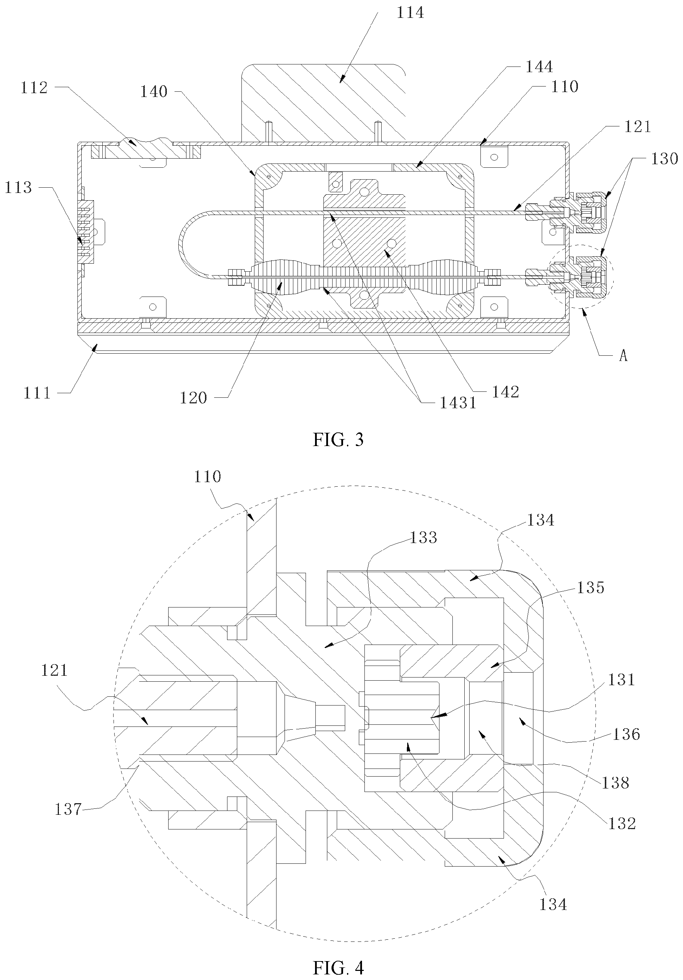

**In** some embodiments, referring to FIG. 2 and FIG. 3, the column cartridge assembly 10 is provided with a heating compartment 140. The heating compartment 140 is provided with a first pressing plate 142 and a heating assembly 143, and the first pressing plate 142 abuts against and fits with the heating assembly 143. A restricting groove 1431 is defined by the first pressing plate 142 and the heating assembly 143 surrounding together. The restricting groove 1431 is configured for accommodating at least a part of the chromatographic column 120, and the heating assembly 143 is configured for heating the chromatographic column 120 accommodated in the restricting groove 1431. Each of the column cartridge assembly 10 is provided with one heating compartment 140, and the heating compartment 140 is provided with one chromatographic column 120. By defining the restricting groove 1431 between the first pressing plate 142 and the heating assembly 143 as a temperature-control space of the chromatographic column 120 and providing only one chromatographic column 120 in each of the restricting groove 1431, a whole size of the heating assembly 143 can be greatly reduced, making the temperature-control space more compact. At the same time, one heating assembly 143 is configured for controlling a temperature of each of the chromatographic columns 120. When the plurality of chromatography devices are used together, the temperature of each of the plurality of chromatographic columns 120 can be independently controlled. **In** addition, since the plurality of chromatographic columns 120 are independently provided, the temperature of each of the plurality of chromatographic columns 120 can be controlled more accurately, and temperature interference between the plurality of chromatographic columns 120 can be avoided, thereby making a testing result of the chromatography device more stable and reliable.

**In** some embodiments, the chromatographic column 120 is in communication with the adapter assembly 130 via a pipeline 121. The pipeline 121 includes a sample inlet pipeline. One end of the simple inlet pipeline is in communication with one of the two first channels 131 of the two adapter assemblies 130, and the other end of the simple inlet pipeline is connected to and in communication with an inlet port of the chromatographic column 120. The restricting groove 1431 is configured for accommodating a part of the sample inlet pipeline, and the heating assembly 143 is further configured for heating the sample inlet pipeline accommodated in the restricting groove 1431, so as to pre-heat the sample in the sample inlet pipeline. **In** this way, the sample in the chromatographic column 120 can reach a target temperature quickly, and a temperature of the sample in the chromatographic column 120 is more accurate, therefore making the test result of the chromatography column to the sample more stably and reliable.

**In** some embodiments, the heating assembly 143 includes a heating component 1432 and a thermal conductor 1433. One side of the thermal conductor 1433 is connected to the heating component 1432, the other side of the thermal conductor 1433 abuts against and match with the first pressing plate 142, and the restricting groove 1431 is defined by the first pressing plate 142 and the thermal conductor 1433 surrounding together. The heating component 1432 is configured for heating the chromatographic column 120 and the sample inlet pipeline accommodated in the restricting groove 1431. The temperature sensor is configured for testing a temperature of the thermal conductor 1433. Both the temperature sensor and the heating component 1432 are in communication connection with the thermal switch, and the thermal switch is configured for turning on or turning off the heating component 1432 according to a temperature tested by the temperature sensor. It could be understood that after the heating component 1432 generates heat, the heat is transferred to the thermal conductor 1433, and the heat is transferred to the temperature-control space of the restricting groove 1431 via the thermal conductor 1433, so that the chromatographic column 120 accommodated in the restricting groove 1431 and the sample inlet pipeline accommodated in the restricting groove 1431 are heated.

In some embodiments, the heating assembly 143 further includes a temperature sensor 1434 and a thermal switch 1435. The temperature sensor 1434 is configured for testing a temperature of the thermal conductor 1433. Both the temperature sensor 1434 and the heating component 1432 are in communication connection with the thermal switch 1435, and the thermal switch 1435 is configured for turning on or turning off the heating component 1432 according to a temperature tested by the temperature sensor 1434. In this way, the temperature of the chromatographic column 120 in the heating compartment 140 can be accurately measured.

Furthermore, the heating compartment 140 further includes a baseplate 141 and a cover plate 144. A mounting space is defined by the baseplate 141 and the cover plate 144 surrounding together. The chromatographic column120, the heating assembly 143 and the first pressing plate 142 are disposed in the mounting space. In addition, the heating assembly 143 is disposed on the baseplate 141, the baseplate 141 is provided on a side of the heating component 1432 away from the thermal conductor 1433, and the baseplate 141 and the cover body 144 are detachably connected. When the cover body 144 is detached from the baseplate 141, the chromatographic column 120 can be changed. The chromatographic column 120 and the heating assembly 143 are integrated in the heating compartment 140, so that the heating compartment 140 is more compact, and a volume of the heating compartment 140 and the column cartridge assembly 10 can be saved.

It should be noted that a method for changing the chromatographic column 120 in the heating compartment 140 includes following steps: detaching the cover body 144, detaching the first pressing plate 142, separating both ends of the chromatographic column 120 from the pipeline 121, connecting the pipeline 121 with the new chromatographic column 120, placing new chromatographic column 120 into the restricting groove 1431, and disposing the cover body 144 after connecting the first pressing plate 142.

Furthermore, a pipeline 121 extends through the cover body 144, and the pipeline 121 is configured for connecting the chromatographic column 120 with the adapter assembly 130. Thus, the chromatographic column 120 can be in communication with the first channel 131 of the adapter assembly 130.

In some embodiments, the cartridge body 110 is further provided with a bayonet socket 113, the bayonet socket 113 is provided with an intelligent chip, and the bayonet socket 113 extends through the cartridge body 110. The frame 210 is provided with a plug connector 212. When the column cartridge assembly 10 is positioned on the frame 210 by the positioning assembly 230, the plug connector 212 is capable of inserting into the bayonet socket 113. The intelligent chip is configured for identifying, reading, loading, and editing the information of the chromatographic column integrated in the column cartridge assembly 10. The information of the chromatographic column includes but is not limited to the type of the filler, the density of the filler, the specifications and the models, the production batches and the period of validity.

It could be understood that in related art, the method for identifying the chromatographic column is pasting a bar code on the chromatographic column and identifying the chromatographic column by scanning the bar code. However, the method for identifying the chromatographic column by scanning the bar code has a plurality of problems, for example, limited information-storing capability, high environmental dependence, poor stability, poor material adaptability, and a corresponding infrared scanner should be provided and the cost is high. In addition, the infrared scanner has reading limitations, and the infrared scanner can work only when the bar code is placed within a scanning arear of the infrared scanner. In the present invention, by providing the intelligent chip, the information of the chromatographic column can be intelligently identified, read and loaded by reading the intelligent chip. Thus, in the present embodiment, the intelligent chip not only has high storage volume, can be recycled and has low cost, and the scanning operation is not required and the operation is simple. Identifying and reading the intelligent chip have been disclosed in the related art, and are omitted in the present invention.

In some embodiments, the plug connector 212 is provided correspondingly to the bayonet socket 113. When the column cartridge assembly 10 arrives the target position, the plug connector 212 automatically inserts into the bayonet socket 113. In this way, a degree of automation of the chromatography device can be improved, and the changing process of the chromatographic column 120 can be further simplified.

In some embodiments, the cartridge body 110 is further provided with a lifting handle 114, which facilitates taking out or putting in the column cartridge assembly 10.

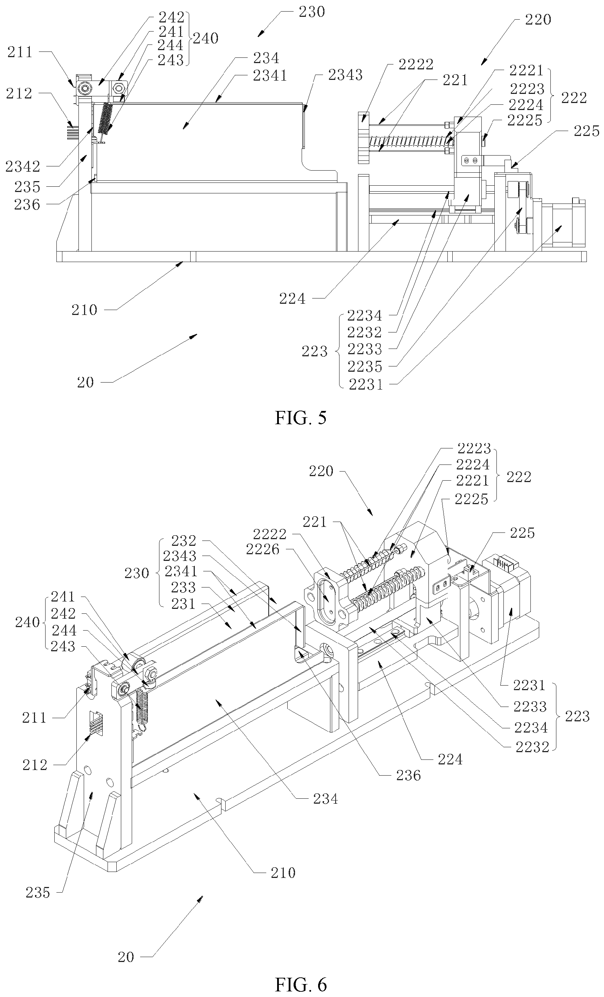

In some embodiments, referring to FIG. 6, the positioning assembly 230 is provided with a positioning groove 231, and the positioning groove 231 is configured for accommodating the column cartridge assembly 10. A side of the positioning groove 231 is provided with a first opening 232, and the first opening 232 is provided towards the sample input-output unit 220. It could be understood that when the column cartridge assembly 10 is disposed in the positioning groove 231, a side wall that is provided with the adapter assembly 130 of the cartridge body 110 is provided towards the first opening 232. The adapter assembly 130 is provided adjacent to the first opening 232. Thus, when the sample probe 221 of the sample input-output unit 220 moves from the second position to the first position, the sample probe 221 can insert into the first channel 131 of the adapter assembly 130 through the first opening 232, so that the sample probe 221 is in communication with the chromatographic column 120.

Furthermore, the positioning groove 231 is provided with a second opening 233. In this way, it is convenient to put the column cartridge assembly 10 into the positioning groove 231 or take the column cartridge assembly 10 out form the positioning groove 231. Furthermore, an extending direction of the first opening 232 intersects with the extending direction of the second opening 233. In the present embodiment, the column cartridge assembly 10 can be put into or taken out of the positioning groove 231 from the first opening 232, the second opening 233, or an intersection of the first opening 232 and the second opening 233, so that it is more convenient to put in or take out the column cartridge assembly 10.

**In** some embodiments, the first opening 232 and the second opening 233 can be one opening. The opening is not limited herein in the present invention, as long as the column cartridge assembly 10 can extend into the positioning groove 231 from the opening and the opening does not affect the sample probe 221 inserting into the first channel 131 of the adapter assembly 130. **In** some embodiments, the opening extends diagonally downwards towards the sample input-output unit 220. **In** this way, not only the sample probe 221 can insert into the first channel 131 of the adapter assembly 130 through the opening, but also the column cartridge assembly 10 can be conveniently taken out or put in.

**In** some embodiments, the positioning assembly 230 includes two positioning plates 234 disposed opposite to each other. A positioning groove 231 is defined between the two positioning plates 234 surrounding together, and a side of the positioning groove 231 opposite to the first opening 232 is provided with a first plate 235. It could be understood that the first channel 131 of the adapter assembly 130 is sealed, and the sample probe 211 can be inserted into the first channel 131 of the adapter assembly 130 when the sample probe is applied with a certain force. The first plate 235 can provide an abutting site for the column cartridge assembly 10. **In** addition, in the process of inserting the sample probe 221 into the first channel 131, moving of the column cartridge assembly 10 along an extending direction of the positioning groove 231 caused by a pushing force applied by the sample probe 221 to the adapter assembly 130 can be avoided. Thus, the sample probe 221 can enter the first channel 131 of the adapter 130 smoothly. **In** addition, the positioning groove can restrict the column cartridge assembly 10, so as to prevent the column cartridge assembly 10 from moving in the positioning groove 231.

Furthermore, at least a part of the first channel 131 is a linear type channel, and at least an end of the sample probe 221 adjacent to the positioning groove 231 is linear type. The positioning groove 231 can facilitate the central axis of the linear type first channel 131 in the column cartridge assembly 10 to align at the central axis of the linear type sample probe 221, so as to ensure that the sample probe 221 can enter the first channel 131 of the adapter assembly 130.

**In** some embodiments, the first plate 235 can be disposed on the frame 210, or can be disposed on the side of the positioning plate 234 away from the first opening 232. The position of the first plate 234 is not limited herein in the present invention, as long as the positioning groove 231 can be defined by the first plate 235 and the positioning plate 234 surrounding together.

In some embodiments, a length of the positioning groove 231 is longer than a length of the column cartridge assembly 10. In this way, the positioning groove 231 can provide a sufficient operating space for the column cartridge assembly 10, so that it is convenient for taking out or putting in the column cartridge assembly 10, and accidentally injure of the sample input-output unit 220 while putting in or taking out the column cartridge assembly 10 can be avoided; in particular, accidentally injure of the sample probe 221 while putting in or taking out the column cartridge assembly 10 can be avoided.

Furthermore, a bottom of the positioning groove 231 is provided with a guiding slideway 236, the column cartridge assembly 10 is provided with a guiding groove 111, and the guiding groove 111 is in slidingly fit with the guiding slideway 236. In this way, the column cartridge assembly 10 can be pushed to the target position along the guiding slideway 236, which facilitates moving of the column cartridge assembly 10 in the positioning groove 231.

In some embodiments, referring to FIG. 5 and FIG. 6, the cartridge-changing mechanism 20 further includes a pressing assembly 240, and the pressing assembly 240 includes a pressing member 241, a connecting member 242 and a first elastic member 243. An end of the connecting member 242 is rotatably connected to the frame 210, the other end of the connecting member 242 is connected to the pressing member 241. The first elastic member 243 acts on the connecting member 242 or the pressing member 241, so that the pressing member 241 abuts against and is pressed on the column cartridge assembly 10. By applying a pressure on the column cartridge assembly 10 via the pressing assembly 240, the position of the column cartridge assembly 10 in the positioning groove 231 can be further stabilized, so as to ensure that the sample probe 211 can flow smoothly into the first channel 131 of the adapter assembly 130, and the column cartridge assembly 10 will not move when the sample probe 211 leaves the first channel 131.

A bottom of the pressing member 241 is flush with or slightly lower than a top surface of the column cartridge assembly 10. A position of the pressing member 241 at which the pressing member 241 is not in contact with the column cartridge assembly 10 is defined as a normal position. It could be understood that in the process that from the beginning that the pressing member 241 is in contact with the column cartridge assembly 10 to the column cartridge assembly 10 arrives the target position, the pressing member 241 can perform an arc-shaped motion with a junction of the connecting member 242 and the frame 210 as the center and the line defined between the pressing member 241 and the junction as a radius. In this way, the pressing member 241 will not obstacle the column cartridge assembly, and the column cartridge assembly 10 will successfully arrives the target position. When the pressing member 241 moves away from the normal position along with moving of the column cartridge assembly 10, the first elastic member 243 will draw the pressing member 241 back to the normal position or apply a tension force for drawing the pressing member 241 to the normal position on the pressing member 241. In this way, it is ensured that the pressing member 241 presses and abuts on the column cartridge assembly 10 from the beginning to the end, so that the pressure applied by the pressing assembly 240 on the column cartridge assembly 10 is maximized, and a pressing performance of the pressing assembly 240 to the column cartridge assembly 10 is optimized.

In some embodiments, the first elastic member 243 can be components that can store and release energy, and maintain the contacting pressure between the connecting member 242 and the column cartridge assembly 10. The first elastic member 243 can be components such a spring, a pull strap and the like. In some embodiments, an end of the connecting member 242 away from the pressing member 241 is rotatably connected to the first plate 235, and is rotatably connected to the positioning plate 234. The component connected to the end of the connecting member 242 is not limited, as long as the pressing member 241 can abut against and press the column cartridge assembly 10.

In some embodiments, the pressing member 241 is rotatably connected to the connecting member 242. In this way, after the pressing member 241 is in contact with the column cartridge assembly 10, moving of the pressing member 241 in the column cartridge assembly 10 is more smoothly, and the pressing member 241 will not obstacle the moving of the column cartridge assembly 10 in the positioning groove 231.

In some embodiments, the pressing member 241 is connected to the connecting member 242 via an axle, the axle extends through the axle, and the pressing member 241 can rotate around a circumference of the axle. Furthermore, the pressing member 241 can be an idler wheel or a roller. It could be understood that the embodiments are merely illustrative, and are not limited thereto in the present invention.

In some embodiments, in a height direction of the column cartridge assembly 10, a restricting member 112 protrudes out from an upper surface of the column cartridge assembly 10. When one end of the column cartridge assembly 10 abuts against the first plate 235, the pressing member 241 abuts against and presses the restricting member 112. The restricting member 112 can restrict the pressing member 241. Thus, relative moving between the pressing member 241 and the column cartridge assembly 10 can be prevented, and pressing and abutting performance of the pressing member 241 to the column cartridge assembly 10 can be improved.

In some embodiments, the restricting member 112 can be wave-shaped. The restricting member 112 includes two peaks and a trough disposed between the two peaks. When an end of the column cartridge assembly 10 abuts against the first plate 235, the pressing member 241 abuts against and presses the trough, and the two peaks can restrict the pressing member 241. Thus, the pressing and abutting performance of the pressing member 241 to the column cartridge assembly 10 can be further improved, and relative movement between the pressing member 241 and the column cartridge assembly 10 can be prevented. When the peak of the restricting member 112 arrives the position of the pressing member 241, the pressing member 241 moves along the surface of the peak and is lifted by the peak to the highest point of the peak. Then, due to alternation of the peak and the trough and the pressure of the first elastic member 243, the pressing member 241 gradually decreases, and finally abuts against and presses the trough.

**In** some embodiments, the pressing assembly 240 further includes a shock-absorbing pad 244. Along a height direction of the positioning plate 234, the shock-absorbing pad 244 is provided between an upper end of the positioning plate 234 and the connecting member 242. The shock-absorbing pad 244 is connected to the positioning plate 234, and the shock-absorbing pad 244 abuts against the connecting member 242. It could be understood that when the column cartridge assembly 10 separates from the pressing member 241, the pressing member 241 may move towards the positioning groove under the action of the pressure and the gravity of the first elastic member 243, and the shock-absorbing pad 244 can prevent the pressing member 241 from contacting the position plate 234, so as to maintain stability of the positioning plate 234 and the positioning groove 231. In addition, the shock-absorbing pad 244 can make the pressing member 241 be kept at the normal position.

In some embodiments, the positioning plate 234 is provided with a first flange 2341 extending towards a direction away from the positioning groove, and the shock-absorbing pad 244 is connected to the first flange 2341. The first flange 2341 can increase the connecting area between the positioning plate 234 and the shock-absorbing pad 244. Thus, the connecting of shocking-absorbing pad 244 on the first flange 2341 is more stable, and the shock-absorbing pad 244 can play a better cushioning effect. In addition, when the column cartridge assembly 10 is disposed in the positioning groove 231, the first flange 2341 can prevent the edge of the positioning plate 234 from cutting the column cartridge assembly 10.

Furthermore, a side of the positioning plate 234 away from the sample input-output unit 220 is provided with a second flange 2342. The second flange 2342 extends towards a direction away from the positioning groove 231, and the second flange 2342 is connected to the edge of the first plage 235. That is, along a width direction of the positioning groove 231, a space is defined between the side of the positioning plate 234 away from the positioning groove 231 and the edge of the first plate 235, and the first elastic member 243 can be accommodated in the space. In this way, the space can protect the first elastic member 243, so as to prevent the first elastic member 243 from falling caused by unintended touching, thereby ensuring that the first elastic member 243 can apply a stable tension force on the pressing member 241 and ensuring the abutting and pressing performance of the pressing assembly 240 on the column cartridge assembly 10. Thus, the cartridge-changing mechanism 20 can be more compact.

Furthermore, the first opening 232 of the positioning plate 234 is provided with a third flange 2343, and the third flange 2343 can extend along a direction away from the positioning groove 231. The third flange 2343 can provide an abutting position for the sample input-output unit 220.

In some embodiments, the frame 210 is provided with a first position-detecting component 211. The first position-detecting component 211 is configured for detecting a position of the column cartridge assembly 10, and the first position-detecting component 211 is in communication connection with the sample input-output unit 220. After the first position-detecting component 211 detects that the column cartridge assembly 10 arrives the target position, the sample input-output unit 220 can drive the sample probe 221 to the first position. Thus, the sample probe can automatically move between the first position and the second position, thereby improving the degree of automation of the chromatography device, and further simplifying the process for changing the chromatographic column 120.

In some embodiments, the sample input-output unit 220 further includes a driving assembly 222 and a pushing component 223. The two sample probes 221 are disposed on the pushing component 223, the driving assembly 222 drives the pushing component 223 to move, so as to drive the two sample probes 221 to move between the first position and the second position. The sample probes 221 are controlled by the driving assembly 222 and the pushing component 223 to move between the first position and the second position, thereby improving the degree of automation of the chromatography device, and further simplifying the process for changing the chromatographic column 120.

In some embodiments, the pushing component 223 includes a fixing plate 2221, a second pressing plate 2222, a second elastic member 2223 and a guiding roller 2224. The fixing plate 2221 is provided correspondingly to the second pressing plate 2222. An end of the sample probe 221 is fixed to the fixing plate 2221, and the other end of the sample probe 221 extend through the second pressing plate 2222. The guiding roller 2224 movably extends through the fixing plate 2221. One end of the guiding roller 2224 is fixed to the second pressing plate 2222, the other end of the guiding roller 2224 is provided with the restricting portion 2225. The restricting portion 2225 restricts at one side of the fixing plate 2221 to prevent the guiding roller 2224 from separating from the fixing plate 2221. The fixing plate 2221 can be driven by the driving component 2231 to move along an axis of the guiding roller 2224, and cause the sample probe 221 to move between the first position and the second position. The second elastic member 2223 is sleeved on the guiding roller 2224, and both ends of the second elastic member 2223 abuts against the fixing plate 2221 and the second pressing plate 2222, respectively, so that the restricting portion 2225 abuts against the side of the fixing plate 2221 away from the second pressing plate 2222. In this way, rectilinear motion o the sample probe 221 can be ensured, making it easier for the sample probe 221 to insert into the first channel 131 of the adapter assembly 130. In addition, in a certain area, the second elastic member 2223 can allow the second pressing plate 2222 to move synchronously along with the fixing plate 2221, and make the second pressing plate 2222 and the fixing plate 2221 to keep relatively still and stable, so as to further improve stability of the moving of the sample probe 221.

It could be understood that the axis of the guiding roller 2224 is in the same direction with a direction along with the sample probe 221 moves between the first position and the second position. The fixing plate 2221 can be driven by the driving assembly 222 to move along the axis of the guiding roller 2224. That is, the fixing plate 2221 can be driven by the driving assembly 222 to move towards or away from the adapter assembly 130. The second elastic member 2223 is sleeved on the guiding roller 2224, and both ends of the second elastic member 2223 abuts against the fixing plate 2221 and the second pressing plate 2222, respectively. Thus, when fixing plate 2221 moves along a direction towards the adapter assembly 130, the fixing plate 2221 can drive the second pressing plate 2222 to move together along the direction towards the adapter assembly 130. In addition, the fixing plate 2221 can further drive the sample probe 221, the second elastic member 2223 and the guiding roller 2224 to move together towards the adapter assembly 130. In view of above, the adapter assembly 130 is disposed in the positioning groove 231 defined by the positioning plate 234 surrounding together, and a first opening 232 towards the second pressing plate 2222 is provided at a side of the positioning groove 231. After the second pressing plate 2222 abuts against the first opening 232, the second pressing plate 2222 and the guiding roller 2224 cannot move towards the adapter assembly 130 anymore, but the fixing plate 2221 continuously move towards the adapter assembly 130. At this time, the fixing plate 2221 is separate from the restricting portion 2225, and the fixing plate 2221 starts pressing the second elastic member 2223, making the second elastic member 2223 transfer into the pressed state from the initial state; at the same time, the end of the sample probe 221 adjacent to the adapter assembly 130 moves relative to the second pressing plate 2222, and the end of the sample probe 221 adjacent to the adapter assembly 130 gradually moves away from the second pressing plate 2222 and towards the adapter assembly 130, until the end of the sample probe 221 adjacent to the adapter assembly 130 insert into the first channel 131 of the adapter assembly 130, and the fixing plate 2221 do not move towards the adapter assembly 130 anymore.

When the fixing plate 2221 moves towards the direction away from the adapter assembly 130 under the action of the driving assembly 222, the end of the sample probe 221 adjacent to the adapter assembly 130 moves relative to the second pressing plate 2222. Then, the end of the sample probe 221 adjacent to the adapter assembly 130 separates from the first channel 131 of the adapter assembly 130, and the end of the sample probe 221 adjacent to the adapter assembly 130 gradually moves away from the adapter assembly 130 and gradually moves towards the second pressing plate 2222, until the second elastic member 2223 recovers to the initial state from the pressed state and the fixing plate 2221 abuts against the restricting portion 2225 of the guiding roller 2224. Then the fixing plate 2221 continuously moves towards the direction away from the adapter assembly 130 under the action of the driving assembly 222. At this time, the fixing plate 2221 can simultaneously drive the sample probe 221, the second pressing plate 2222, the second elastic member 2223 and the guiding roller 2224 to move towards a direction away from the adapter assembly 130.

Furthermore, the first opening 232 of the positioning plate 234 is provided with a third flange 2343. That is, the end of the positioning plate 234 adjacent to the second pressing plate 2222 is provided with the third flange 2343. The second pressing plate 2222 can abut against the third flange 2343. The third flange 2343 can increase the contacting area between the second pressing plate 2222 and the first opening 232 of the positioning plate 234. Thus, the positioning plate 234 can provide an abutting point for the second pressing plate 2222 better, and the third flange 2343 can prevent the edge of the positioning plate 234 from cutting the second pressing plate 2222.

**In** some embodiments, a side of the second pressing plate 2222 adjacent to the adapter assembly 130 is provided with a concave groove 2226. The adapter assembly 130 can be accommodated in the concave groove 2226. **In** addition, the external sidewall of the adapter assembly 130 abuts against a part of the periphery of the sealing cap 134 of the adapter assembly 130, making the central axis of the sample probe 221 coaxial with the central axis of the first channel 131 of the adapter 130. Thus, the sample probe 221 be accurately inserted into the first channel 131.

**In** some embodiments, the driving assembly 222 includes a driving component 2231, a screw rod 2232, a sliding block 2233 and a first guiding rail 2234. The sliding block 2233 fits with the first guiding rail 2234 and is slidable relative to the first guiding rail 2234. The fixing plate 2221 is connected to the sliding block 2233. The driving component 2231 is configured for driving the screw rod 2232 to rotate, so as to make the sliding block 2233 to move along the axis of the screw rod 2232 and make the fixing plate 2221 to drive the sample probe 221 to move between the first position and the second position. Thus, the driving component 2231 can drive the sample probe to move between the first position and the second position.

It could be understood that a direction of the axis of the screw rod 2232 is the same with a direction of the axis of the guiding roller 2224. In some embodiments, the driving component 2231 is a motor, and a central axis of the output shaft of the motor is coaxial with the central axis of the screw rod 2232. Thus, the motor can be directly connected to the screw rod 2232 via the output shaft of the motor. It is not necessary to transfer the driving force of the motor to the screw rod 2232 via a driving medium, and the cost can be saved.

In some embodiments, the driving component 2231 is a motor, and a central axis of the output shaft of the motor is not coaxial with the central axis of the screw rod 2232. The driving assembly 222 further includes a transmission assembly 2235. The motor is connected by the transmission assembly 2235 and the screw rod 2232, and the driving force of the motor can be transferred to the screw rod 2232 via the transmission assembly 2235. Thus, the position of the motor can be randomly disposed, thereby improving the flexibility and the suitability of the chromatography device.

In some embodiments, the sample input-output unit 220 further includes a mounting seat 224. The first guiding rail 2234 is provided on the mounting seat 224. Thus, supporting to the first guiding rail 2234 can be improved. In addition, by adjusting the height of the mounting seat 224, the central axis of the sample probe 221 is coaxial with the central axis of the first channel 131 of the adapter assembly 130.

In some embodiments, the sample input-output unit 220 further includes a second position-detecting component 225, and the second position-detecting component 225 is configured for testing a position of the fixing plate 2221. The second position-detecting component 225 is in communication connection with the PLC and the driving component 2231. With the position of the fixing plate 2221 detected by the second position-detecting component 225, the driving component 2231 is controlled by the PLC to drive the fixing plate 2221 to move or stop moving. Furthermore, the second position-detecting component 225 is an optoelectronic switch and a restricting sheet matching with the optoelectronic switch. The restricting sheet is provided at a side of the fixing plate 0 2221 away from the second pressing plate 2222, and the optoelectronic switch is provided on the frame 20.

In some embodiments, a size of the end of the sample probe 221 adjacent to the adapter assembly 130 gradually decreases. That is, along a direction from the sample probe to the adapter assembly 130, the size of the end of the sample probe 221 gradually decreases. Thus, it is convenient to insert the adapter assembly 130 into the first channel.

The present invention further provides a chromatography system, which includes the chromatography device of any one of the embodiments.

In related art, the plurality of chromatographic column are placed in the same column-shaped insulated container. The column-shaped insulated container should be provided with a large heating component, which makes a volume of the insulated container and the chromatography system large, and makes the cost high. **In** addition, when one of the chromatographic columns in the column-shaped insulated container should be changed, a door or box cover of the column-shaped insulated container should be opened, and the process of changing the chromatographic column requires a period of time, thereby leading to temperature fluctuation in the whole column-shaped insulated container, and affecting temperature control of other chromatographic column in operation and stability and reliability of the detecting results.

**In** the present embodiment, a plurality of chromatography device can be provided at the same time, and each of the plurality of chromatography devices includes only one chromatographic column 120. **In** this way, the temperature of each of the chromatographic columns 120 can be controlled independently. In addition, since the plurality of chromatographic columns are mutually independent, the temperature of each of the chromatographic columns 120 can be controlled more accurately. Temperature interference between the plurality of chromatographic columns 120 can be avoided and the detecting results of the chromatography device to the samples are more stable and reliable.

The present invention further provides a method for changing a chromatography column. The method is used to change a chromatographic column in a chromatography device described in the embodiments above. The column cartridge assembly includes a first column cartridge assembly and a second column cartridge assembly. The first column cartridge assembly is a column cartridge assembly positioned on the frame of the chromatography device before changing the chromatographic column, and the second column cartridge assembly is a column cartridge assembly positioned on the frame of the chromatography device after changing the chromatographic column.

The method for changing the chromatography column includes following steps: transferring sample probes from the first position to the second position, and separating the sample probes from adapter assemblies of the first column cartridge assembly; taking the first column cartridge assembly out from the frame; positioning the second column cartridge assembly on the frame; and transferring the sample probes from the second position to the first position, inserting the sample probes into the adapter assemblies of the second column cartridge assembly, and communicating and connecting the sample probes with the first channels of the second column cartridge assembly, so as to change chromatographic column.

It could be understood that before disposing the second column cartridge assembly in the chromatography device, a new chromatographic column should be disposed in the second column cartridge assembly, and the new chromatographic column should be connected to and in communication with the adapter assembly. It is not necessary for the chromatography device to stop working in the process of preparing the second column cartridge assembly. The new chromatographic column should be prepared before detaching the first column cartridge assembly. In the chromatography device of the present invention, when the sample probe is transferred to the second position and the sample probe separate from the adapter assembly, the first column cartridge assembly is taken out from the frame and the second column cartridge assembly is disposed at a target position. When the sample probe is transferred to the first position, the inside of the sample probe is in communication with the first channel. Thus, the column cartridge assembly and the chromatographic column can be quickly changed. **In** the present invention, the chromatographic column is integrated in the column cartridge assembly, so that the chromatographic column can be quickly changed by changing the column cartridge assembly. Thus, the processing of changing the chromatographic column can be simplified, and a time for changing the chromatographic column can be saved.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A chromatography device, **characterized by** comprising a column cartridge assembly (10) and a cartridge-changing mechanism (20),
wherein the column cartridge assembly (10) comprises a cartridge body (110) and a chromatographic column (120) disposed in the cartridge body (110), two adapter assemblies (130) are connected to two ends of the chromatographic column (120), both of the two adapter assemblies (130) extend through a sidewall of the cartridge body (110), each of the two adapter assemblies (130) is provided with a first channel (131), and the first channel (131) is in communication with an inside of the chromatographic column (120),
the cartridge-changing mechanism (20) comprises a frame (210) and a sample input-output unit (220) provided on the frame (210), the frame (210) is provided with a positioning assembly (230), the positioning assembly (230) is configured for positioning the column cartridge assembly (10),
the sample input-output unit (220) is provided with two movable sample probes (221), the two sample probes are connected to the two adapter assemblies (130), respectively,
when the column cartridge assembly (10) is positioned on the frame (210) by the positioning assembly (230), the two sample probes (221) are capable of moving between a first position and a second position, when the two sample probes (221) move to the first position, the two sample probes (221) are capable of extending into the two first channels (131), so that insides of the two sample probes (221) are in communication with the two first channels (131), when the two sample probes (221) move to the second position, the two sample probes (221) are capable of separating from two adapter assemblies (130).

2. The chromatography device of claim 1, wherein the cartridge-changing mechanism (20) further comprises a pressing assembly (240), and the pressing assembly (240) comprises a pressing member (241), a connecting member (242) and a first elastic member (243), and
an end of the connecting member (242) is rotatably connected to the frame (210), the other end of the connecting member (242) is connected to the pressing member (241), the first elastic member (243) is capable of acting on the connecting member (242) or the pressing member (241), so that the pressing member (241) abuts against and is pressed on the column cartridge assembly (10).

3. The chromatography device of claim 1, wherein both ends of each of the two adapter assemblies (130) are provided on two sides of the sidewall of the cartridge body (110), respectively;
each of the two adapter assemblies (130) comprises a sealing member (132), a sealing soleplate (133) and a sealing cap (134), the sealing soleplate (133) extends through the sidewall of the cartridge body (110), the sealing soleplate (133) is detachably connected with the sealing cap (134), a sealing space is defined by the sealing soleplate (133) and the sealing cap (134) surrounding together, the sealing member (132) is disposed in the sealing space, and the sealing member (132) is provided with the first channel (131); and
when the two sample probes (221) are located at the first position, the two sample probes (221) are capable of extending through the sealing cap (134), and external sidewalls of the two sample probes (221) abut against and fit with the two first channels (131).

4. The chromatography device of claim 3, wherein each of the two adapter assemblies (130) further comprises a junk ring (135), and the junk ring (135) is disposed between the sealing member (132) and the sealing cap (134), so as to press the sealing member (132) on the sealing soleplate (133).

5. The chromatography device of claim 1, wherein the column cartridge assembly (10) is provided with a heating compartment (140), the heating compartment (140) is provided with a first pressing plate (142) and a heating assembly (143), and the first pressing plate (142) abuts against and fits with the heating assembly (143), a restricting groove (1431) is defined by the first pressing plate (142) and the heating assembly (143), the restricting groove (1431) is configured for accommodating at least a part of the chromatographic column (120), and the heating assembly (143) is configured for heating the chromatographic column accommodated in the restricting groove (1431).

6. The chromatography device of claim 5, wherein the chromatographic column (120) is connected to the two adapter assemblies (130) via a pipeline (121), the pipeline (121) comprises a sample inlet pipeline, one end of the simple inlet pipeline is in communication with one of the two first channels (131), the other end of the simple inlet pipeline is connected to and in communication with an inlet port of the chromatographic column (120), the restricting groove (1431) is configured for accommodating a part of the sample inlet pipeline, and the heating assembly (143) is further configured for heating the sample inlet pipeline accommodated in the restricting groove (1431).

7. The chromatography device of claim 5, wherein the heating assembly (143) comprises a heating component (1432), a thermal conductor (1433), a temperature sensor (1434) and a thermal switch (1435), one side of the thermal conductor (1433) is connected to the heating component, the other side of the thermal conductor (1433) abuts against and is matched with the first pressing plate (142), and the restricting groove is defined by the first pressing plate (142) and the thermal conductor (1433) surrounding together,
the heating component (1432) is configured for heating the chromatographic column (120) accommodated in the restricting groove (1431);
the temperature sensor (1434) is configured for testing a temperature of the thermal conductor (1433), and
both the temperature sensor (1434) and the heating component (1432) are in communication connection with the thermal switch (1435), and the thermal switch (1435) is configured for turning on or turning off the heating component (1432) according to a temperature tested by the temperature sensor (1434).

8. The chromatography device of claim 1, wherein the cartridge body (110) is further provided with a bayonet socket (113), the bayonet socket is provided with an intelligent chip, and the bayonet socket (113) extends through the cartridge body (110); and
the frame (210) is provided with a plug connector (212), when the column cartridge assembly (10) is positioned on the frame (212) by the positioning assembly (230), the plug connector (212) is capable of inserting into the bayonet socket (113).

9. A chromatography system, **characterized by** comprising the chromatography device of any one of claims 1 to 8.

10. A method for changing a chromatography column, **characterized in that** the method is used to change a chromatographic column (120) in a chromatography device of any one of claims 1 to 8, the column cartridge assembly (10) comprises a first column cartridge assembly and a second column cartridge assembly, the first column cartridge assembly is a column cartridge assembly positioned on the frame (210) of the chromatography device before changing the chromatographic column (120), and the second column cartridge assembly is a column cartridge assembly positioned on the frame (210) of the chromatography device after changing the chromatographic column (120),
the method for changing the chromatography column comprises:
transferring sample probes (221) from the first position to the second position, and separating the sample probes (221) from adapter assemblies (130) of the first column cartridge assembly (220);
taking the first column cartridge assembly (220) out from the frame (210);
positioning the second column cartridge assembly on the frame (210); and
transferring the sample probes (221) from the second position to the first position, inserting the sample probes (221) into the adapter assemblies (130) of the second column cartridge assembly, and communicating and connecting the sample probes (221) with first channels (131) of the second column cartridge assembly, so as to the change chromatographic column (120).
